# EUROPÄISCHE PATENTANMELDUNG

(11) **EP 2 223 990 A1**
(43) Veröffentlichungstag der Anmeldung: **01.09.2010**
(21) Anmeldenummer: 10152234.0
(22) Anmeldetag: 01.02.2010
(51) Int. Cl.: C10L 5/00, C10L 5/44, C10L 11/04

(54) **Verpackungseinheit enthaltend Formkörper zwei verschiedener fester Brennstoffe**

(30) Priorität: 13.03.2009 DE 202009003484 U; 06.02.2009 DE 202009001444 U
(71) Anmelder: RWE Power Aktiengesellschaft, 45128 Essen (DE)
(72) Erfinder: Brandtner, Uwe, 99425 Weimar (DE); Vosseberg, Klaus, 52388 Nörvenich (DE); Müller, Michael, 15827 Blankenfelde (DE); Lange, Raimund, 50226 Frechen (DE)
(74) Vertreter: Heine, Christian Klaus

(57) **Zusammenfassung**

Die erfindungsgemäße Verpackungseinheit (1), umfassend eine erste vorgebbare Anzahl erste Brennstoffformkörper (3) und eine zweite vorgebbare Anzahl zweite Brennstoffformkörper (4), die zumindest teilweise von einer gemeinsamen Verpackung (2) umgeben sind, zeichnet sich dadurch aus, dass mindestens eine der folgenden Bedingungen erfüllt ist:
a) der erste Brennstoffformkörper (3) hat einen Gehalt an Kohlenstoff von mindestens 65 Ma.-% (Masseprozent) und der zweite Brennstoffformkörper (4) hat einen Gehalt an Kohlenstoff von höchstens 55 Ma.-%;
b) der erste Brennstoffformkörper (3) weist einen Gehalt von höchstens 55 Ma.-% flüchtigen Bestandteilen und der zweite Brennstoffformkörper (4) einen Gehalt von mindestens 75 Ma.-% flüchtigen Bestandteilen auf; und
c) der erste Brennstoffformkörper (3) ist aus einem Material ausgebildet, das einen Quotienten des Masseanteils von Kohlenstoff zu Sauerstoff größer 2,5 aufweist, während der zweite Brennstoffformkörper (4) aus einem Material ausgebildet ist, das einen Quotienten des Masseanteils von Kohlenstoff zu Sauerstoff kleiner 1,6 aufweist.

## Beschreibung

Gegenstand der vorliegenden Erfindung ist eine Verpackungseinheit von Brennstoffformkörpern. Bevorzugter Einsatzbereich der vorliegenden Erfindung ist eine Verpackungseinheit, zumindest teilweise umfassend Braunkohlebriketts.

Brennstoffformkörper wie beispielsweise Braunkohlenbriketts werden vielfach zum Heizen, insbesondere in entsprechenden Einzelfeuerstätten eingesetzt. Im Allgemeinen ist es schwierig, Brennstoffformkörper direkt über ihre Zündtemperatur zu erhitzen. Hierzu werden Zündhilfen eingesetzt. Insbesondere dann, wenn nur begrenzte Lagerkapazitäten vorliegen, um Zündhilfen zu bevorraten, oder wenn die Einzelfeuerstätte nur zeitweise benutzt wird, ist es nachteilig oder nicht möglich, sowohl Brennstoffformkörper als auch Zündhilfen für diese zu bevorraten.

Hiervon ausgehend liegt der vorliegenden Erfindung die Aufgabe zugrunde, die aus dem Stand der Technik bekannten Nachteile zu verbessern und insbesondere eine Verpackungseinheit für Brennstoffformkörper anzugeben, die gleichzeitig Zündhilfen für diese umfassen.

Diese Aufgabe wird gelöst durch eine Verpackungseinheit mit den Merkmalen des unabhängigen Anspruchs. Abhängige Ansprüche sind auf vorteilhafte Weiterbildungen gerichtet.

Die erfindungsgemäße Verpackungseinheit umfasst eine erste vorgebbare Anzahl erste Brennstoffformkörper und eine zweite vorgebbare Anzahl zweite Brennstoffformkörper, die zumindest teilweise von einer gemeinsamen Verpackung umgeben sind, und zeichnet sich dadurch aus, dass mindestens eine der folgenden Bedingungen erfüllt ist:
a) der erste Brennstoffformkörper hat einen Gehalt an Kohlenstoff von mindestens 65 Ma.-% (Masseprozent) und der zweite Brennstoffformkörper hat einen Gehalt an Kohlenstoff von höchstens 55 Ma.-%;
b) der erste Brennstoffformkörper weist einen Gehalt von höchstens 55 Ma.-% flüchtigen Bestandteilen und der zweite Brennstoffformkörper einen Gehalt von mindestens 75 Ma.-% flüchtigen Bestandteilen auf; und
c) der erste Brennstoffformkörper ist aus einem Material ausgebildet, das einen Quotienten des Masseanteils von Kohlenstoff zu Sauerstoff größer 2,5 aufweist, während der zweite Brennstoffformkörper aus einem Material ausgebildet ist, das einen Quotienten des Masseanteils von Kohlenstoff zu Sauerstoff kleiner 1,6 aufweist.

Die in den Bedingungen a) bis c) angegebenen Werte beziehen sich auf den wasser- und aschefreien Zustand des Materials. Bevorzugt ist bei Bedingung a) eine Ausgestaltung, bei denen der erste Brennstoffformkörper mindestens 68 Massenprozent Kohlenstoff, insbesondere sogar mindestens 69 Massenprozent Kohlenstoff aufweist. Weiterhin bevorzugt ist eine Ausgestaltung der Bedingung a), bei der der zweite Brennstoffformkörper höchstens 50 Massenprozent Kohlenstoff umfasst. Bei der Bedingung b) ist eine Ausgestaltung bevorzugt, bei der der erste Brennstoffformkörper höchstens 50 Massenprozent flüchtige Bestandteile und der zweite Brennstoffformkörper einen Gehalt von mindestens 70 Massenprozent flüchtigen Bestandteilen aufweist.

Bei der erfindungsgemäßen Verpackungseinheit wirken die zweiten Brennstoffformkörper als Zündhilfe für die ersten Brennstoffformkörper, die bevorzugt Braunkohlenbriketts darstellen. Eine Einzelfeuerstätte kann so durch Zünden der zweiten Brennstoffformkörper auf eine Temperatur oberhalb der Zündtemperatur der ersten Brennstoffformkörper erhitzt werden. Danach können die ersten Brennstoffformkörper zugegeben werden und verbrennen dann.

In vorteilhafter Weise werden die flüchtigen Bestandteile (z.B. Kohlenmonoxid, Kohlenwasserstoffe) des zweiten Brennstoffformkörpers bei niedrigeren Temperaturen (beispielsweise bei Temperaturen oberhalb von 100°C oder sogar von größer als 150°C), in größerer Menge gemäß Bedingung b)) und/oder mit einer höheren Geschwindigkeit (gemäß Bedingung c)) im Vergleich zum ersten Brennstoffformkörper freigesetzt, entzündet und verbrannt. Dies stellt eine exotherme chemische Reaktion des oder der zweiten Brennstoffformkörper dar, die die für den endothermen Prozess der Freisetzung der flüchtigen Bestandteile (bei Temperaturen von beispielsweise größer als 200°C oder sogar größer als 250°C) des ersten Brennstoffkörpers sowie dessen Entzündung benötigte Energie zur Verfügung stellt.

Unter dem Begriff flüchtige Bestandteile werden insbesondere Verbindungen verstanden, die bei einer Temperatur von beispielsweise 100°C, bevorzugt 200°C, besonders bevorzugt von 300°C in reiner Form gasförmig vorliegen, beispielsweise Kohlenmonoxid (CO) und/oder Kohlenwasserstoffe. Insbesondere weist bei Bedingung b) der erste Brennstoffformkörper flüchtige Bestandteile auf, die bei einer Temperatur von mindestens 180°C aus dem ersten Brennstoffformkörper austreten und der zweite Brennstoffformkörper flüchtige Bestandteile, die bei einer Temperatur von mindestens 100°C aus dem zweiten Brennstoffformkörper austreten. Bevorzugt sind die flüchtigen Bestandteile brennbar, so dass durch den höheren Gehalt an flüchtigen Bestandteilen im zweiten Brennstoffformkörper und insbesondere dann, wenn diese bei einer niedrigeren Temperatur austreten als die flüchtigen Bestandteile des ersten Brennstoffformkörpers eine frühere Zündung der zweiten Brennstoffformkörper erfolgt, so dass diese eine Einzelfeuerstätte durch die dann ablaufenden und auf den Brennstoffformkörper selbst übergehenden exothermen Reaktionen aufwärmen.

Die Verpackungseinheit ist bevorzugt in der Form ausgeführt, dass mindestens eine der nachstehenden Bedingungen erfüllt ist:
(i) ein Quotient aus der Summe der Massen der ersten Brennstoffformkörper zu der Summe der Massen der zweiten Brennstoffformkörper ist größer oder gleich 1; und
(ii) ein Quotient aus der ersten Anzahl zur zweiten Anzahl ist größer oder gleich 1 und liegt vorzugsweise im Bereich von 2 bis 4.

Gemäß einer besonders vorteilhaften Ausgestaltung der erfindungsgemäβen Verpackungseinheit liegt ein Quotient der ersten Anzahl zur zweiten Anzahl im Bereich von 2 bis 4.

Eine solche Zusammenstellung der Verpackungseinheit erlaubt den Betrieb einer Einzelfeuerstätte beispielsweise mit Braunkohlenbriketts als erstem Brennstoffformkörper für eine vorgebbare Zeitspanne, beispielsweise 2 bis 5 Stunden, bei genügend Zündhilfe in Form von zweiten Brennstoffformkörpern.

Gemäß einer weiteren vorteilhaften Ausgestaltung der erfindungsgemäβen Verpackungseinheit ist der zweite Brennstoffformkörper zumindest teilweise aus einem nachwachsenden Rohstoff ausgebildet.

Viele nachwachsende Rohstoffe wie beispielsweise Holz erfüllen grundsätzlich mindestens eine der Bedingungen a) bis c), so dass sich diese in vorteilhafter Weise als zweite Brennstoffformkörper einsetzen lassen.

Gemäß einer weiteren vorteilhaften Ausgestaltung der erfindungsgemäβen Verpackungseinheit sind die zweiten Brennstoffformkörper aus mindestens einem der folgenden Materialien ausgebildet:
a) Holz;
b) Holzspäne;
c) Stroh; und
d) Naturfasern.

Holz kann insbesondere in Form von Spänen, Scheiten, Kernholz, Splintholz und/oder Rinde ausgebildet sein. Insbesondere Holzscheite und Holzbriketts haben sich als vorteilhafte Ausgestaltungen der zweiten Brennstoffformkörper ausgewiesen. Stroh, insbesondere von Raps, Mais und/oder Getreiden, und/oder Holzspäne und/oder Torf können in beliebiger Kombination miteinander und/oder mit weiteren Stoffen in vorteilhafter Weise zu zweiten Brennstoffformkörpern verpresst werden. Unter Naturfasern werden insbesondere Baumwoll-, Sisal-, Flachs-, Kokos-, Hanf-, Leinen-, Kapok-, Nessel-, Jute- und/oder Wollfasern verstanden. Insbesondere können gegebenenfalls Altstoffe wie beispielsweise so genannte Lumpen zu zweiten Brennstoffformkörpern verarbeitet werden, in dem die Fasern zerkleinert und mit einem Bindemittel wie beispielsweise einem Naturharz verklebt und verpresst werden.

Gemäß einer weiteren vorteilhaften Ausgestaltung der erfindungsgemäßen Verpackungseinheit umfasst die gemeinsame Verpackung Papier.

Papier ist einfach und umweltfreundlich herstell- und entsorgbar und kann weiterhin selber umweltfreundlich verbrannt werden. Insbesondere kann das Papier in vorteilhafter Weise als Zündhilfe für die zweiten Brennstoffformkörper dienen und erlaubt weiterhin einen sicheren und einfachen Transport und eine sichere und saubere Lagerung der Brennstoffformkörper.

Gemäß einer weiteren vorteilhaften Ausgestaltung der erfindungsgemäβen Verpackungseinheit weist die gemeinsame Verpackung eine Feuchtigkeitssperre auf.

Insbesondere kann die Feuchtigkeitssperre als Beschichtung von Papier, beispielsweise mit Polyethylen oder Polyurethan ausgebildet sein. Die Feuchtigkeitssperre verhindert in vorteilhafter Weise ein Ein- oder Durchfeuchten der Brennstoffformkörper, welches je nach Ausmaß ein Zünden des Brennstoffformkörpers erschwert oder sogar verhindert. Die Feuchtigkeitssperre verbessert insbesondere in Kombination mit anderen Schutzmaßnahmen (z. B. Schrumpfhauben) ebenfalls die Lagerfähigkeit der erfindungsgemäßen Verpackungseinheit, da diese insbesondere bei Lagerung im freien oftmals beispielsweise Regen oder ähnlichem ausgesetzt sind.

Gemäß einer weiteren vorteilhaften Ausgestaltung der erfindungsgemäßen Verpackungseinheit weist die Verpackung eine Sollöffnung auf und die zweite Anzahl zweite Brennstoffformkörper ist zwischen Sollöffnung und der ersten Anzahl erste Brennstoffformkörper ausgebildet.

Unter Sollöffnung ist ein Mittel zum Öffnen der Packung an einer vorbestimmten Stelle zu verstehen, die beispielsweise eine Perforation oder Verdünnung, ein Abrissband oder ähnliches umfassen kann, mittels dem die Verpackung an einer bestimmten Sollposition geöffnet werden kann. Form und Sollposition der Sollöffnung sind insbesondere so gewählt, dass auch nach Öffnen der Sollöffnung die Brennstoffformkörper nicht selbsttätig aus der Verpackung fallen können. Bevorzugt ist die Sollöffnung so gestaltet, dass diese ohne weiteres Werkzeug nur mit den Händen geöffnet werden kann.

Gemäß einer weiteren vorteilhaften Ausgestaltung der erfindungsgemäßen Verpackungseinheit weist die Verpackung eine Sollöffnung auf, wobei die Verpackung und erste und zweite Brennstoffformkörper so ausgebildet sind, dass bei Öffnung der Sollöffnung zumindest die zweiten Brennstoffformkörper direkt von der Sollöffnung zugänglich sind.

Insbesondere kann dies dadurch erreicht werden, dass die Verpackung einen vorgegebenen Verpackungsboden zum Aufsetzen auf einen Untergrund und einen Verpackungsoberbereich mit der Sollöffnung aufweist, wobei erste und zweite Brennstoffformkörper mit einer Schmalseite auf dem Verpackungsboden nebeneinander ausgebildet sind, so dass bei Öffnung der Sollöffnung sowohl erste als auch zweite Brennstoffformkörper entnehmbar sind, ohne dass zuvor einer der anderen Brennstoffformkörper entnommen werden muss.

Im Folgenden wird die Erfindung anhand der beigefügten Figuren näher erläutert, ohne auf die dort gezeigten Details und Vorteile beschränkt zu sein. Es zeigen schematisch:
- Fig. 1: eine Vorderansicht eines ersten Ausführungsbeispiels einer erfindungsgemäßen Verpackungseinheit;
- Fig. 2: einen Querschnitt durch das erste Ausführungsbeispiel einer erfindungsgemäße Verpackungseinheit; und
- Fig. 3: eine Prinzipskizze eines zweiten Ausführungsbeispiels einer erfindungsgemäßen Verpackungseinheit.

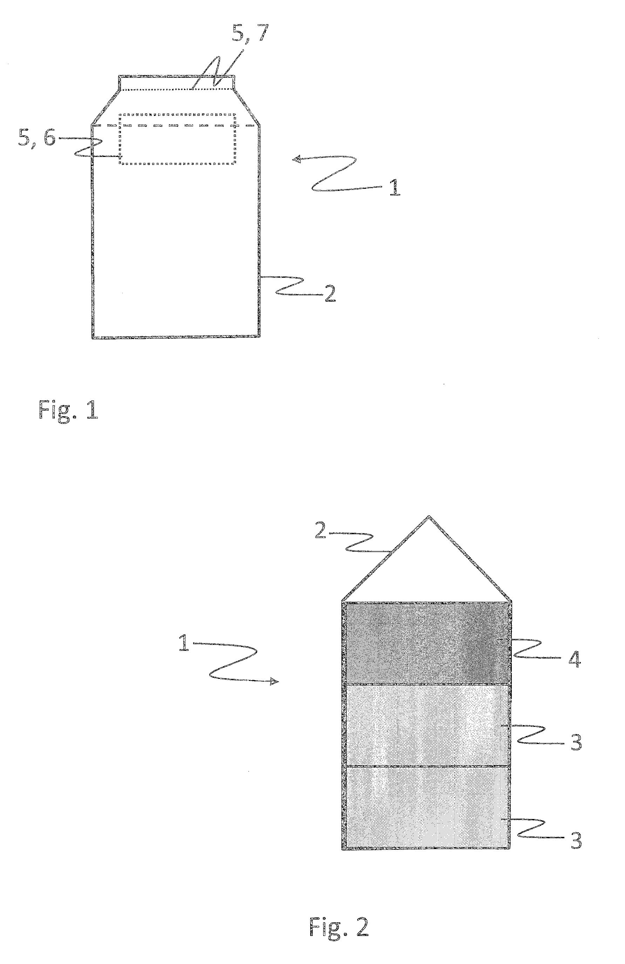

Fig. 1 und 2 zeigen schematisch ein Ausführungsbeispiel der erfindungsgemäßen Verpackungseinheit 1 in einer Vorderansicht und im Querschnitt. Diese umfasst eine Verpackung 2, in der erste Brennstoffformkörper 3, nämlich Braunkohlebriketts, und zweite Brennstoffformkörper 4, gestapelt aufgenommen sind. Erste 3 und zweite Brennstoffformkörper 4 können sowohl liegend als auch stehend in die Verpackung 2 eingebracht werden, dass heißt sowohl mit einer Längs- als auch mit einer Schmalseite auf dem Boden der Verpackung aufstehen. Bevorzugt sind erste 3 und zweite Brennstoffformkörper 4 so ausgebildet, dass sie sich zumindest in einer Raumdimension in der entsprechenden Länge entsprechen, um so Beschädigungen der Verpackung 2 durch Relativbewegungen der ersten 3 und zweiten Brennstoffformkörper 4 gegeneinander zu verhindern.

Die zweiten Brennstoffformkörper 4 umfassen insbesondere Holzscheite, beispielsweise aus Buchenholz, und/oder Holzbriketts. Es können unterschiedliche zweite Brennstoffformkörper 4 in einer Verpackungseinheit 1 ausgebildet sein, die insbesondere so ausgewählt sind, dass ein optimaler Aufheizvorgang einer Einzelfeuerstätte beim Verbrennen der zweiten Brennstoffformkörper 4 vor den ersten Brennstoffformkörper 3 zum Vorbereiten der Verbrennung der ersten Brennstoffformkörper 3 gegeben ist. Die ersten 3 und zweiten Brennstoffformkörper 4 sind so ausgebildet, dass mindestens eine der oben angegebenen Bedingungen a) bis c) erfüllt ist.

Die Verpackung 2 umfasst mindestens eine Sollöffnung 5, die ein einfaches Öffnen der Verpackung 2 erlaubt. Bevorzugt ist hierbei eine Perforation 6 in der Verpackung 2 oder ein Aufreißband 7. Die zweiten Brennstoffformkörper 4 sind näher an der Sollöffnung 5 ausgebildet als die ersten Brennstoffformkörper 3 und liegen zwischen diesen und der Sollöffnung 5. Dies erlaubt ein Entnehmen der zweiten Brennstoffformkörper 4 vor den ersten Brennstoffformkörpern 3, um die zweiten Brennstoffformkörper 4 zum Anheizen einer Feuerstelle wie beispielsweise einer Einzelfeuerstätte vor Verbrennung der ersten Brennstoffformkörper 3 zu benutzen.

Die Verpackung 2 ist aus mehrlagigem Papier ausgeführt. Erste 3 und zweite Brennstoffformkörper 4 sind so gestaltet, dass sie sich in ihren geometrischen Abmessungen insbesondere in zwei Raumdimensionen entsprechen, dass heißt um höchstens 10% voneinander abweichen. Dies erlaubt ein sicheres Stapeln der Brennstoffformkörper 3, 4, ohne dass es durch verrutschende Brennstoffformkörper zu Beschädigungen der Verpackung 2 kommt. Bevorzugt weist die erfindungsgemäße Verpackungseinheit 1 zwei Lagen erste Brennstoffformkörper 3 und eine Lage zweite Brennstoffformkörper 4 auf.

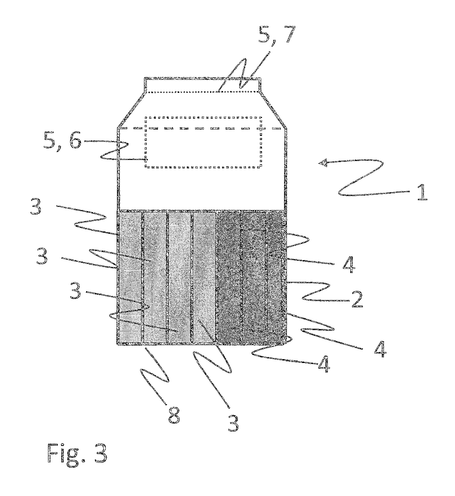

Fig. 3 zeigt schematisch eine Prinzipskizze eines zweiten Ausführungsbeispiels einer erfindungsgemäßen Verpackungseinheit 1. Im Unterschied zum ersten Ausführungsbeispiel sind erste 3 und zweite Brennstoffformkörper hier mit ihren Schmalseiten auf einem Verpackungsboden 8 gelagert. Erste 3 und zweite Brennstoffformkörper 4 stehen also nebeneinander, so dass beim Öffnen der Sollöffnung 5 sowohl erste 3 als auch zweite Brennstoffformkörper 4 entnommen werden können. Sowohl erste 3 als auch zweite Brennstoffformkörper 4 sind folglich direkt von der Sollöffnung 5 zugänglich.

### Bezugszeichenliste

- 1: Verpackungseinheit
- 2: Verpackung
- 3: erster Brennstoffformkörper
- 4: zweiter Brennstoffformkörper
- 5: Sollöffnung
- 6: Perforation
- 7: Aufreißband
- 8: Verpackungsboden

## Patentansprüche

1. Verpackungseinheit (1), umfassend eine erste vorgebbare Anzahl erste Brennstoffformkörper (3) und eine zweite vorgebbare Anzahl zweite Brennstoffformkörper (4), die zumindest teilweise von einer gemeinsamen Verpackung (2) umgeben sind, **dadurch gekennzeichnet, dass** mindestens eine der folgenden Bedingungen erfüllt ist:
a) der erste Brennstoffformkörper (3) hat einen Gehalt an Kohlenstoff von mindestens 65 Ma.-% (Masseprozent) und der zweite Brennstoffformkörper (4) hat einen Gehalt an Kohlenstoff von höchstens 55 Ma.-%;
b) der erste Brennstoffformkörper (3) weist einen Gehalt von höchstens 55 Ma.-% flüchtigen Bestandteilen und der zweite Brennstoffformkörper (4) einen Gehalt von mindestens 75 Ma.-% flüchtigen Bestandteilen auf; und
c) der erste Brennstoffformkörper (3) ist aus einem Material ausgebildet, das einen Quotienten des Masseanteils von Kohlenstoff zu Sauerstoff größer 2,5 aufweist, während der zweite Brennstoffformkörper (4) aus einem Material ausgebildet ist, das einen Quotienten des Masseanteils von Kohlenstoff zu Sauerstoff kleiner 1,6 aufweist.

2. Verpackungseinheit (1) nach Anspruch 1, bei der mindestens eine der folgenden Bedingungen erfüllt ist:
(i) ein Quotient aus der Summe der Massen der ersten Brennstoffformkörper (3) zu der Summe der Massen der zweiten Brennstoffformkörper (4) ist größer oder gleich 1; und
(ii) ein Quotient aus der ersten Anzahl zur zweiten Anzahl ist größer oder gleich 1 und liegt vorzugsweise im Bereich von 2 bis 4.

3. Verpackungseinheit (1) nach einem der vorhergehenden Ansprüche, bei der der zweite Brennstoffformkörper (4) zumindest teilweise aus einem nachwachsenden Rohstoff ausgebildet ist.

4. Verpackungseinheit (1) nach einem der vorhergehenden Ansprüche, bei dem die zweiten Brennstoffformkörper (4) aus mindestens einem der folgenden Materialien ausgebildet sind:
a) Holz;
b) Holzspäne;
c) Stroh; und
d) Naturfasern.

5. Verpackungseinheit (1) nach einem der vorhergehenden Ansprüche, bei dem die gemeinsame Verpackung (2) Papier umfasst.

6. Verpackungseinheit (1) nach einem der vorhergehenden Ansprüche, bei dem die gemeinsame Verpackung (2) eine Feuchtigkeitssperre aufweist.

7. Verpackungseinheit (1) nach einem der vorhergehenden Ansprüche, bei der die Verpackung (2) eine Sollöffnung (5) aufweist und die zweite Anzahl zweite Brennstoffformkörper (4) zwischen Sollöffnung (5) und der ersten Anzahl erste Brennstoffformkörper (3) ausgebildet ist.

8. Verpackungseinheit (1) nach einem der vorhergehenden Ansprüche, bei der die Verpackung (2) eine Sollöffnung (5) aufweist, wobei die Verpackung (2) und erste (3) und zweite Brennstoffformkörper (4) so ausgebildet sind, dass bei Öffnung der Sollöffnung (5) zumindest die zweiten Brennstoffformkörper (4) direkt von der Sollöffnung (5) zugänglich sind.
